# EUROPEAN PATENT SPECIFICATION

(11) **EP 3 021 334 B1**
(45) Date of publication and mention of the grant of the patent: **16.01.2019**
(21) Application number: 13889135.3
(22) Date of filing: 09.07.2013
(51) Int. Cl.: H01F 27/14, H01F 27/00

(54) **CONSERVATOR**
KONSERVATOR
CONSERVATEUR

(43) Date of publication of application: 18.05.2016
(73) Proprietor: Mitsubishi Electric Corporation, Tokyo 100-8310 (JP)
(72) Inventor: MINO, Kenichi, Tokyo 100-8310 (JP); NISHIURA, Ryuichi, Tokyo 100-8310 (JP); IDEMARU, Toshiki, Tokyo 100-8310 (JP)
(74) Representative: Sajda, Wolf E.
(86) International application number: PCT/JP2013/068709
(87) International publication number: WO 2015/004726

(56) References cited:
- CN-U- 202 871 478
- JP-A- H0 935 943
- JP-U- S57 626
- JP-U- S57 626
- JP-U- S5 137 227
- JP-U- S5 137 227

## Description

### TECHNICAL FIELD

The present invention relates to a conservator, and in particular, relates to a conservator provided with an oil level gauge.

### BACKGROUND ART

As a prior art, Japanese Patent Laid-Open JP 2012-147 582 A (PTD 1) discloses a conservator equipped with a liquid level gauge. The liquid level gauge disclosed in PTD 1 is disposed in the conservator as a detector for detecting an abnormality in an insulating spacer, and is provided with a float having a circular shape in profile.

As a prior art, Japanese Utility Model Laid-Open JP 6-031 118 U (PTD 2) discloses a conservator equipped with an oil level gauge including a plate-shaped float. The oil level gauge disclosed in PTD 2 for a conservator is a supersonic wave-typed oil level gauge in which a plate-shaped float is attached to a bottom surface of a diaphragm opposite to the supersonic wave-typed oil level gauge, and is immersed in an insulation oil so as to constantly maintain horizontal the bottom surface of the diaphragm which serves as a reflection surface.
PTD 3 discloses an oil surface display device of a diaphragm type conservator. The oil level of a diaphragm type conservator is designed to convert the up and down movement of the up and down diaphragm in accordance with the increase and decrease of the oil amount into the swing motion of the detection arm, thereby activating the oil level gauge and displaying the oil amount in a display device.

### LIST OF CITATIONS

### PATENT DOCUMENTS

- PTD 1:: Japanese Patent Laid-Open No. JP 2012-147 582 A
- PTD 2:: Japanese Utility Model Laid-Open JP 6-031 118 U
- PTD 3:: JP S51 37227 U

### SUMMARY OF THE INVENTION

### TECHNICAL PROBLEM

As a float to be used in an oil level gauge, it is necessary for it to have at least a certain volume so as to obtain sufficient buoyancy in an insulation oil. Therefore, in the case of the float having a circular shape in profile described in PTD 1, the necessary volume is provided by increasing the diameter of the float.

However, increasing the diameter of the float having a circular shape in profile results in increasing a dead region where the oil level of the insulation oil is undetectable. Specifically, in the case where the amount of the insulation oil in the conservator is less, the oil level of the insulation oil may be lower than the diameter of the float.

In this case, since the float cannot move in response to the oil level in the conservator, the oil level of the insulation oil is undetectable. Since a larger diameter of a float increases the dead region where the oil level is undetectable, an extra amount of insulation oil is needed, and thereby, the conservator must be made larger accordingly so as to house therein that extra amount of insulation oil.

In the oil level gauge disclosed in PTD 2, the plate-shaped float is fixed directly to the lower surface of the rubber bag, and is adapted to be used only in an ultrasonic oil level gauge. Therefore, it is not considered to be used in a dial oil level gauge which is cheaper than the ultrasonic fuel level meter.

The present invention has been made in view of the above problems, and an object thereof is to provide a compact and cheap conservator with a reduced dead region.

### SOLUTION TO THE PROBLEM

According to the invention, the problem is solved by means of a conservator as defined in independent claim 1. Advantageous further developments of the conservator according to the invention are set forth in the subclaims.

### ADVANTAGEOUS EFFECTS OF THE INVENTION

According to the present invention, it is possible to make the conservator compact and cheap while reducing the dead region.

### BRIEF DESCRIPTION OF THE DRAWINGS

- FIG. 1: is a sectional view illustrating the configuration of a conservator according to a first embodiment of the present invention;
- FIG. 2: is a view illustrating the outer appearance of a dial display unit viewed from the direction of an arrow II in FIG. 1;
- FIG. 3: is a sectional view illustrating the conservator in a state where an insulation oil is filled to an upper limit of a display range by the dial display unit;
- FIG. 4: is a view illustrating the outer appearance of a dial display unit viewed from the direction of an arrow IV in FIG. 3;
- FIG. 5: is a sectional view illustrating the conservator in a state where the insulation oil flows out to a lower limit of the display range by the dial display unit;
- FIG. 6: is a view illustrating the outer appearance of a dial display unit viewed from the direction of an arrow VI in FIG. 5;
- FIG. 7: is a planar view illustrating the configuration of a float unit according to the first embodiment;
- FIG. 8: is a view illustrating the float unit viewed from the direction of an arrow VIII in FIG. 7;
- FIG. 9: is a view illustrating a state in which an arm is swung relative to the float unit according to the first embodiment;
- FIG. 10: is a planar view illustrating the configuration of a float unit of an oil level gauge in a conservator according to a second embodiment of the present invention;
- FIG. 11: is a view illustrating the float unit from the direction of an arrow XI in FIG. 10;
- FIG. 12: is a view illustrating a state in which an arm is swung relative to the float unit according to the second embodiment;
- FIG. 13: is a planar view illustrating the configuration of a float unit of an oil level gauge in a conservator according to a third embodiment of the present invention;
- FIG. 14: is a view illustrating the float unit viewed from the direction of an arrow XIV in FIG. 13;
- FIG. 15: is a view illustrating a state in which an arm is swung relative to the float unit according to the third embodiment;
- FIG. 16: is a planar view illustrating the configuration of a float unit of an oil level gauge in a conservator according to an example;
- FIG. 17: is a view illustrating the float unit viewed from the direction of an arrow XVII in FIG. 16; and
- FIG. 18: is a view illustrating a state in which an arm is swung relative to the float unit according to the example.

### DESCRIPTION OF EMBODIMENTS

Hereinafter, a conservator according to a first embodiment of the present invention will be described with reference to the drawings. In the description of the following embodiments, the same or corresponding portions in the drawings will be assigned with the same reference numerals, and the description thereof will not be repeated.

### First Embodiment

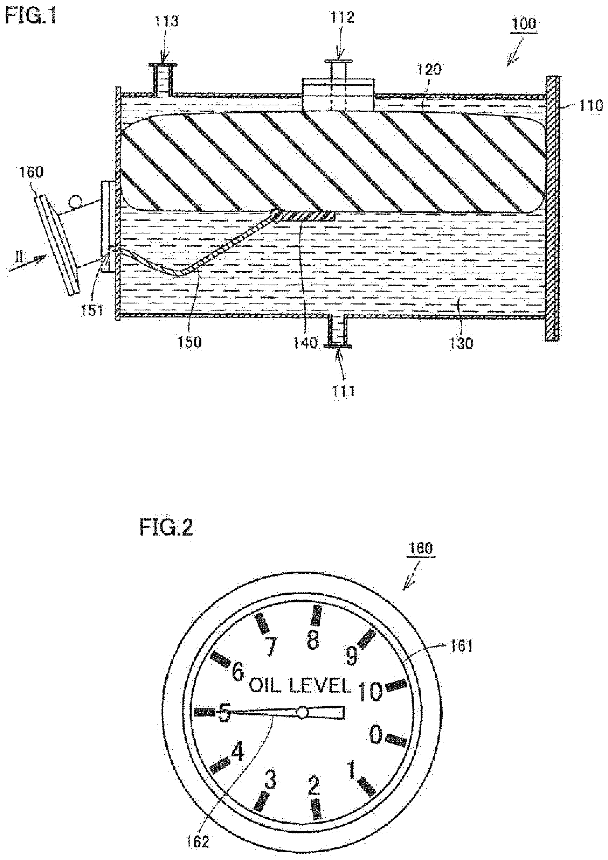

FIG. 1 is a sectional view illustrating the configuration of a conservator according to the first embodiment of the present invention. FIG. 2 is a view illustrating the outer appearance of a dial display unit viewed from the direction of an arrow II in FIG. 1. In FIG. 1, an insulation oil is filled to approximately a half of the housing.

As illustrated in FIG. 1, a conservator 100 according to the first embodiment of the present invention includes a housing 110 that houses an insulation oil 130, a rubber bag 120 that inflates or deflates inside the housing 110 so as to contact an oil surface of the insulation oil 130, and an oil level gauge that detects an oil level of the insulation oil 130 housed in the housing 110.

The bottom surface of the housing 110 is provided with a flange 111 to be connected by a connection pipe connected to a tank that houses a stationary induction apparatus such as a transformer. The top center of the housing 110 is provided with an open valve 112 which is connected to the mouth of the rubber bag 120. The top of the housing 110 is provided an opening 113 for releasing air out of the housing 110.

The internal space of the housing 110 is divided into two parts by the rubber bag 120. A part of the internal space of the housing 110 outside the rubber bag 120 is filled with the insulation oil 130, and the other part of the internal space of the housing 110 inside the rubber bag 120 is filled with air at atmospheric pressure.

Specifically, after injecting a certain amount of the insulation oil 130 into the housing 110, air is pumped into the rubber bag 120 from the open valve 112 to inflate the rubber bag 120, and thereby, the air inside the housing 110 is released from the opening 113. Thereafter, the opening 113 is closed, and thereby, in the housing 110, the inside space of the rubber bag 120 is filled with air, and the outside space of the rubber bag 120 is filled with the insulation oil 130.

The oil level gauge includes a float unit 140, an arm 150 connected to one end of the float unit 140, and a dial display unit 160 that displays an oil level in response to an angle of the arm 150. The dial display unit 160 is disposed on a side surface of the housing 110.

The float unit 140 is swingably connected to the arm 150 and extends to the right in the drawing, in other words, to a direction away from the arm 150 along a lower surface of the rubber bag 120. The length of the float unit 140 in the extending direction thereof is greater than the maximum thickness of the float unit 140.

The arm 150 has a bent shape. A swing fulcrum 151 is provided at one end of the arm 150, serving as a fulcrum for swinging the arm 150. One end of the arm 150 is connected to a gear (to be described later) of the dial display unit 160 located outside the housing 110. The other end of the arm 150 is connected to one end of the float unit 140.

As illustrated in FIG. 2, the dial display unit 160 includes a disc shaped character display face 161 labeled with oil levels, and a pointer 162. Pointer 162 is connected to a gear (not shown). The gear is connected to one end of the arm 150 illustrated in FIG. 1. The dial display unit 160 is configured to magnify an angle displacement of the arm 150 through the gear and display the oil level in accordance with the angle of the arm 150 through the pointer 162.

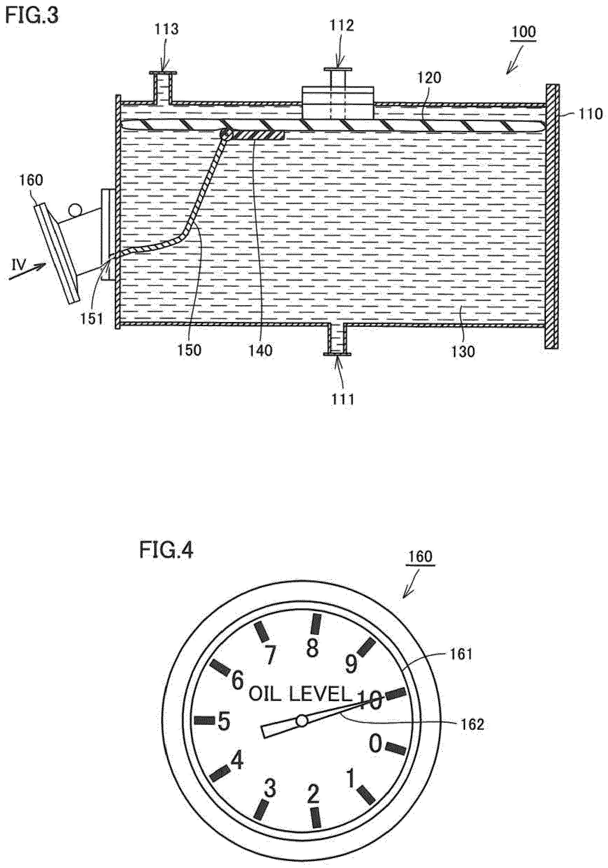

FIG. 3 is a sectional view illustrating the conservator in a state where the insulation oil is filled to an upper limit of a display range by the dial display unit. FIG. 4 is a view illustrating the outer appearance of the dial display unit viewed from the direction of an arrow IV in FIG. 3.

In the case where the stationary induction apparatus continues to work at a high load, the temperature of the insulation oil 130 rises, causing the insulation oil 130 to expand. As a result, the insulation oil 130 flows from the tank into the housing 110 through the connecting pipe. As illustrated in FIG. 3, as the insulation oil 130 flows from the connecting pipe into conservator 100, the rubber bag 120 is deflated by the inflow the insulation oil 130, and thereby, the air in the rubber bag 120 is released out through the open valve 112. Thus, the pressure in the rubber bag 120 is maintained at atmospheric pressure.

As illustrated in FIGS. 3 and 4, if all air in the rubber bag 120 is substantially released, the pointer 162 of the dial display unit 160 points to an oil level of 10, which is the upper limit of the display range.

Thus, as the insulation oil 130 flows into the housing 110, causing the oil level to rise, the float unit 140 rises in response to the rise of the oil level. Therefore, the arm 150 connected to one end of the float unit 140 swings counterclockwise around swing fulcrum 151.

As described above, since the float unit 140 is swingably connected to the arm 150, during the process in which the inflow of the insulation oil 130 deflates the rubber bag 120, the float unit 140 slides to the left side of the drawing along the lower surface of the rubber bag 120, and maintains at the state extending away from the arm 150. Thus, it is possible to prevent the float unit 140 from partially contacting the rubber bag 120 so as to prevent a pressing force against the contact surface from increasing.

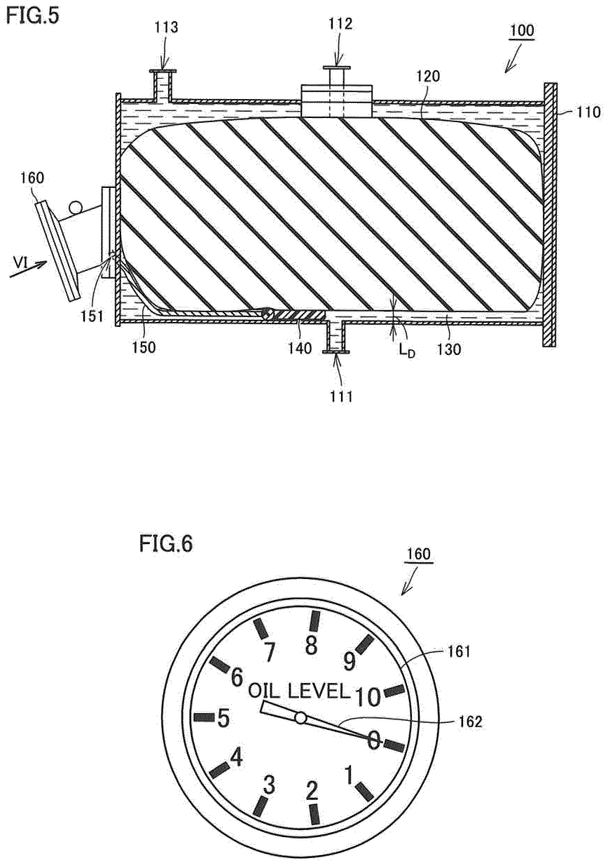

FIG. 5 is a sectional view illustrating the conservator in a state where the insulation oil flows out to a lower limit of the display range by the dial display unit. FIG. 6 is a view illustrating the outer appearance of the dial display unit viewed from the direction of an arrow VI in FIG. 5.

In the case where the stationary induction apparatus is not working and the outside air temperature is low, the temperature of the insulation oil 130 decreases, causing the insulation oil 130 to shrink. As a result, the insulation oil 130 in the housing 110 flows out into the tank through the connecting pipe. As illustrated in FIG. 5, as the insulation oil 130 in the conservator 100 flows out through the connecting pipe, the rubber bag 120 is inflated due to the pressure difference between the inside and the outside of the rubber bag 120. At this time, air flows into the rubber bag 120 through open valve 112, and the pressure in the rubber bag 120 is maintained at atmospheric pressure.

As illustrated in FIGS. 5 and 6, in a state where the float unit 140 is being sandwiched between the bottom surface of the housing 110 and the lower surface of the rubber bag 120, the pointer 162 of the dial display unit 160 points to an oil level of 0, which is the lower limit of the display range. At this time, the region having a height L_{D} between the bottom surface of the housing 110 and the lower surface of the rubber bag 120 becomes the dead region where the oil level is undetectable by the oil level gauge of the conservator 100 according to the present embodiment.

It is preferable that the arm 150 shapes in accordance with the shape of the rubber bag 120 as the float unit 140 is being sandwiched between the bottom surface of the housing 110 and the lower surface of the rubber bag 120.

Thus, as the insulation oil 130 flows out from the housing 110, the oil level descends, and the float unit 140 descends in response to the descent of the oil level. Therefore, the arm 150 connected to one end of the float unit 140 swings clockwise around swing fulcrum 151.

As described above, since the float unit 140 is swingably connected to the arm 150, during the process in which the insulation oil 130 flows out and thereby the rubber bag 120 is inflated, the float unit 140 slides to the right side of the drawing along the lower surface of the rubber bag 120, and maintains at the state extending away from the arm 150. Thus, it is possible to prevent the float unit 140 from partially contacting the rubber bag 120 so as to prevent a pressing force against the contact surface from increasing.

The float unit 140 is configured to extend along the lower surface of the rubber bag 120 away from the arm 150, and the extending length of the float unit 140 is set larger than the maximum thickness of the float unit 140, it is possible to reduce the thickness of the float unit 140 while ensuring a certain volume so as to obtain sufficient buoyancy in the insulation oil 130, which allows to reduce the height L_{D}, i.e., the range of the dead region.

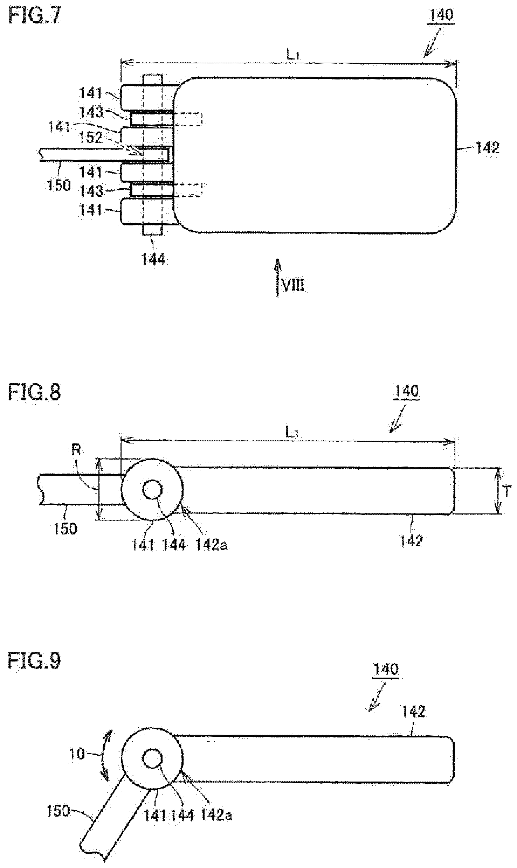

Hereinafter, the detailed configuration of the float unit 140 according to the present embodiment will be described. FIG. 7 is a planar view illustrating the configuration of the float unit according to the present embodiment. FIG. 8 is a view illustrating the float unit viewed from the direction of an arrow VIII in FIG. 7. FIG. 9 is a view illustrating a state in which the arm is swung relative to the float unit of the present embodiment. FIG. 9 is viewed from the same direction as FIG. 8.

As illustrated in FIGS. 7 and 8, the float unit 140 includes a plate-shaped float member 142, and a first pin 144 of a cylindrical shape which serves as a first shaft member provided at one end of the plate-shaped float member 142 and configured to join the plate-shaped float member 142 and the arm 150 in such a manner that they are swingable to each other.

The other end of the arm 150 is provided with a through hole 152 penetrating the arm 150 in a direction perpendicular to the swinging direction of the arm 150. Two joining members 143 are located at one end of the plate-shaped float member 142 with a distance separating each other in the width direction of the plate-shaped float member 142. Each of the two joining members 143 is formed with a through hole penetrating plate-shaped float member 142 in the width direction thereof.

In the present embodiment, each joining member 143 and plate-shaped float member 142 are made integral through insert molding but not limited thereto, for example, each joining member 143 may be bulged from one end of plate-shaped float member 142. That is to say, the plate-shaped float member 142 and the joining members 143 may be formed from the same material integrally.

The diameter of through hole 152 of the arm 150 and the diameter of the through hole of each joining member 143 each is made slightly larger than the diameter of the first pin 144. Thus, after locating the other end of the arm 150 between joining members 143, the first pin 144 is inserted into through hole 152 of the arm 150 and the through holes of the two joining members 143, and thereby, the float unit 140 can be connected to the arm 150, swingable relative to the arm 150 as indicated by an arrow 10 in FIG. 9. Note that both ends of the first pin 144 are swaged so as to prevent the same from falling off.

In the present embodiment, the float unit 140 further includes a first roller-shaped float member 141 rotatably inserted around the first pin 144. Specifically, there are four of the first roller-shaped float members 141 which are inserted through by the first pin 144. The diameter R of each first roller-shaped float member 141 is greater than the thickness T of plate-shaped float member 142.

The four of the first roller-shaped float members 141 are arranged in such a manner that one is close to one end of the first pin 144, one is between one joining member 143 and the arm 150, one is between the arm 150 and the other joining member 143, and the last one is close to the other end of the first pin 144. However, the number of the first roller-shaped float members 141 is not limited to four, it may be one or more.

One end of plate-shaped float member 142 is formed with a curved surface 142a which curves in accordance with the outer shape of the first roller-shaped float member 141.
A length L₁ between a tangent line to the outer edge of the first roller-shaped float member 141 disposed at one end of plate-shaped float member 142 and the other end of plate-shaped float member 142 opposite to the end where the first roller-shaped float member 141 is disposed is defined as the extending length of the float unit 140.

As described above, the extending length of the float unit 140 is greater than the maximum thickness of the float unit 140. In other words, the extending length L₁ of the float unit 140 is greater than the diameter R of the first roller-shaped float member 141.

Thus, by configuring the float unit 140 in such a manner, when the float unit 140 is sliding along the lower surface of the rubber bag 120, the first roller-shaped float members 141 can contact the rubber bag 120 by rolling against the lower surface thereof. As a result, it is possible to reduce the frictional resistance when the float unit 140 is sliding along the lower surface of the rubber bag 120. Thus, it is possible to prevent the rubber bag 120 from being worn out.

Further, by increasing the extending length of the float unit 140 while reducing the maximum thickness thereof, it is possible to ensure the float unit 240 a certain volume so as to obtain sufficient buoyancy in the insulation oil 130. As a result, it is possible to reduce the dead region of the oil level gauge. The reduction of the dead zone allows to make the housing 110 smaller, and thereby making the conservator compact. In addition, it is also possible to reduce the required amount of the insulation oil 130. Furthermore, the adoption of a dial typed oil level gauge allows to produce the conservator cheaper.

Hereinafter, a conservator according to a second embodiment of the present invention will be described with reference to the drawings. It should be noted that since the conservator according to the present embodiment is different from the conservator according to the first embodiment only in the configuration of the float unit, the descriptions about the other components will not be repeated.

### Second Embodiment

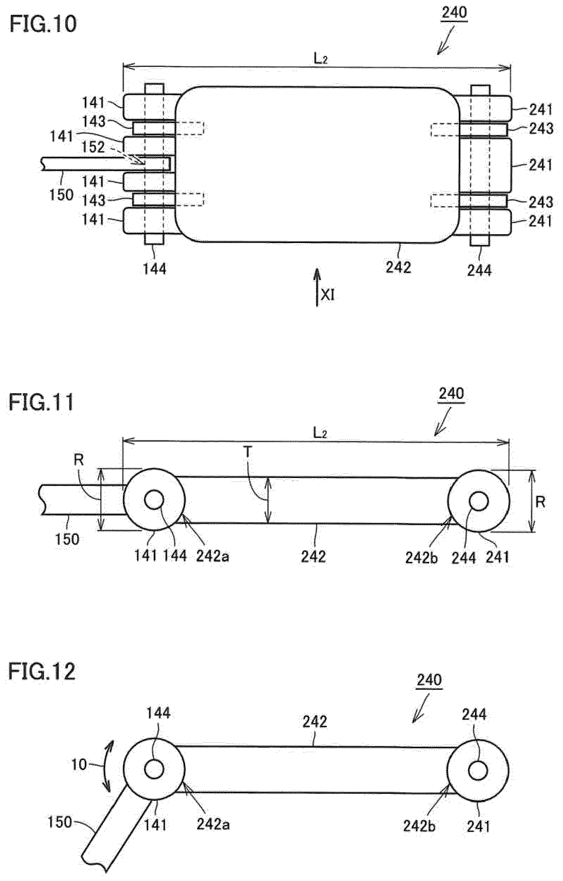

FIG. 10 is a planar view illustrating the configuration of a the float unit of an oil level gauge in a conservator according to the second embodiment of the present invention. FIG. 11 is a view illustrating the float unit from the direction of an arrow XI in FIG. 10. FIG. 12 is a view illustrating a state in which an arm is swung relative to the float unit according to the second embodiment. FIG. 12 is viewed from the same direction as FIG. 11.

As illustrated in FIGS. 10 and 11, a float unit 240 includes a plate-shaped float member 242, and the first pin 144 of a cylindrical shape which serves as a first shaft member provided at one end of the plate-shaped float member 242 and configured to join the plate-shaped float member 242 and the arm 150 in such a manner that they are swingable to each other.

The other end of the arm 150 is provided with a through hole 152 penetrating the arm 150 in a direction perpendicular to the swinging direction of the arm 150. Two joining members 143 are located at one end of the plate-shaped float member 242 with a distance separating each other in the width direction of the plate-shaped float member 242. Each of the two joining members 143 is formed with a through hole penetrating the plate-shaped float member 242 in the width direction thereof.

The float unit 240 further includes a second pin 244 which serves as a second shaft part provided at the other end of the plate-shaped float member 242 in parallel to the first pin 144. Two joining members 243 are located at the other end of the plate-shaped float member 242 with a distance separating each other in the width direction of the plate-shaped float member 242. Each of the two joining members 243 is formed with a through hole penetrating the plate-shaped float member 242 in the width direction thereof. The diameter of the through hole of each joining member 243 is slightly larger than the diameter of the second pin 244.

In the present embodiment, each joining member 143, each joining member 243 and the plate-shaped float member 242 are made integral through insert molding but not limited thereto, for example, each joining member 143 and each joining member 243 may be bulged respectively from both ends of the plate-shaped float member 142. That is to say, the plate-shaped float member 242 and the joining members 143, 243 may be formed from the same material integrally.

The diameter of the through hole 152 of the arm 150 and the diameter of the through hole of each joining member 143 each is made slightly larger than the diameter of the first pin 144. Thus, after locating the other end of the arm 150 between joining members 143, the first pin 144 is inserted into the through hole 152 of the arm 150 and the through holes of the two joining members 143, and thereby, the float unit 240 can be connected to the arm 150, swingable relative to the arm 150 as indicated by arrow 10 in FIG. 12. Note that both ends of the first pin 144 are swaged so as to prevent the same from falling off.

In the present embodiment, the float unit 240 further includes the first roller-shaped float member 141 rotatably inserted around the first pin 144. Specifically, there are four of the first roller-shaped float members 141 which are inserted through by the first pin 144. The diameter R of each first roller-shaped float member 141 is greater than the thickness T of the plate-shaped float member 142.

The four of the first roller-shaped float members 141 are arranged in such a manner that one is close to one end of the first pin 144, one is between one joining member 143 and the arm 150, one is between the arm 150 and the other joining member 143, and the last one is close to the other end of the first pin 144. However, the number of the first roller-shaped float members 141 is not limited to four, it may be one or more.

In the present embodiment, the float unit 240 further includes a second roller-shaped float member 241 rotatably inserted around the second pin 244. Specifically, there are three of the second roller-shaped float members 241 which are inserted through by the second pin 244. The diameter R of each second roller-shaped float member 241 is greater than the thickness T of the plate-shaped float member 242. However, the number of second roller-shaped float members 241 is not limited to three, it may be one or more.

The three of the second roller-shaped float members 241 are arranged in such a manner that one is close to one end of the second pin 244, one is between two adjacent joining members 243, and the last one is close to the other end of the second pin 244. The second pin 244 is inserted into the through holes of the two joining members 243, and both ends of the second pin 244 are swaged so as to prevent the same from falling off.

One end of the plate-shaped float member 242 is formed with a curved surface 242a which curves in accordance with the outer shape of the first roller-shaped float member 141. The other end of the plate-shaped float member 242 is formed with a curved surface 242b which curves in accordance with the outer shape of the second roller-shaped float member 241. A length L₂ between a tangent line to the outer edge of the first roller-shaped float member 141 disposed at one end of the plate-shaped float member 242 and a tangent line to the outer edge of the second roller-shaped float member 241 disposed at the other end of the plate-shaped float member 242 is defined as the extending length of the float unit 240.

As described above, the extending length of the float unit 240 is greater than the maximum thickness of the float unit 240. In other words, the extending length L₂ of the float unit 240 is greater than the diameter R of each of the first roller-shaped float members 141 and each of the second roller-shaped float members 241.

In the present embodiment, although the diameter of the first roller-shaped float member 141 is configured to be the same as the diameter of the second roller-shaped float member 241 but not limited thereto, the diameter of the first roller-shaped float member 141 and the diameter of the second roller-shaped float member 241 may be different from each other as long as the diameter of each float member is smaller than the extending length L₂ of the float unit 240 and greater than the thickness T of the plate-shaped float member 242.

Thus, by configuring the float unit 240 in such a manner, when the float unit 240 is sliding along the lower surface of the rubber bag 120, the first roller-shaped float members 141 and the second roller-shaped float members 241 can contact the rubber bag 120 by rolling against the lower surface thereof. As a result, it is possible to reduce the frictional resistance when the float unit 240 is sliding along the lower surface of the rubber bag 120.

Thus, it is possible to prevent the rubber bag 120 from being worn out. In the present embodiment, since both ends of the float unit 240 are disposed with the roller-shaped float members, compared to the float unit 140 according to the first embodiment, the frictional resistance between the float unit 240 and the lower surface of the rubber bag 120 can be further reduced.

Further, by increasing the extending length of the float unit 240 while reducing the maximum thickness thereof, it is possible to ensure the float unit 240 a certain volume so as to obtain sufficient buoyancy in the insulation oil 130. As a result, it is possible to reduce the dead region of the oil level gauge. The reduction of the dead zone allows to make the housing 110 smaller, and thereby making the conservator compact. In addition, it is also possible to reduce the required amount of the insulation oil 130. Furthermore, the adoption of a dial typed oil level gauge allows to produce the conservator cheaper.

Hereinafter, a conservator according to a third embodiment of the present invention will be described with reference to the drawings. It should be noted that since the conservator according to the present embodiment is different from the conservator according to the first embodiment only in the configuration of the float unit, the descriptions about the other components will not be repeated.

### Third Embodiment

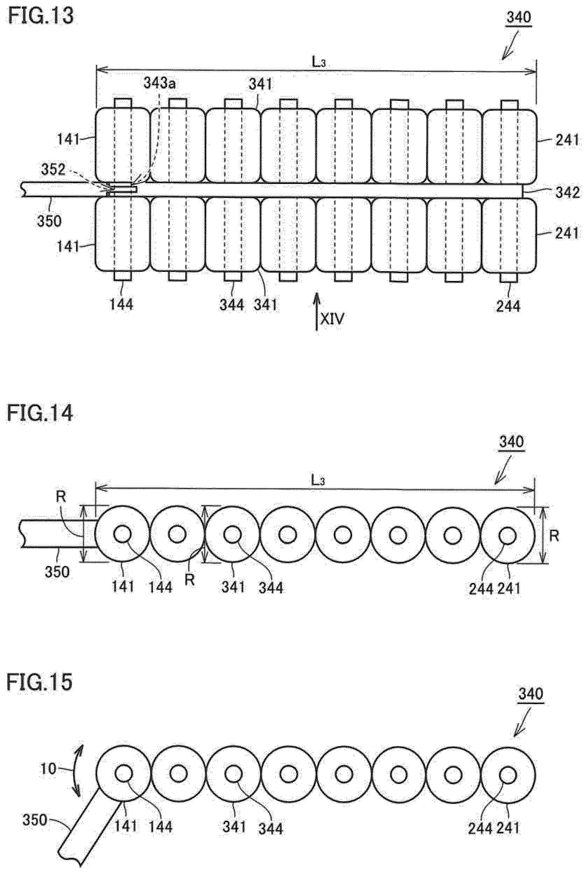

FIG. 13 is a planar view illustrating the configuration of a float unit of an oil level gauge in a conservator according to the third embodiment of the present invention. FIG. 14 is a view illustrating the float unit viewed from the direction of an arrow XIV in FIG. 13. FIG. 15 is a view illustrating a state in which an arm is swung relative to the float unit according to the third embodiment. FIG. 15 is viewed from the same direction as FIG. 14.

As illustrated in FIGS. 13 and 14, a float unit 340 includes a plate-shaped float member 342 which is long in length and narrow in width, and the first pin 144 of a cylindrical shape which serves as a first shaft member provided at one end of the plate-shaped float member 342 and configured to join the plate-shaped float member 342 and the arm 350 in such a manner that they are swingable to each other.

The other end of the arm 350 is provided with a through hole 352 penetrating the arm 350 in a direction perpendicular to the swinging direction of the arm 150. The other end of the arm 350 is made thinner than the other parts. One end of the plate-shaped float member 342 is formed with a groove 343a for housing therein the other end of the arm 350. One end of the plate-shaped float member 342 is provided with a first through hole penetrating the plate-shaped float member 342 in the width direction thereof.

The diameter of the through hole 352 of the arm 350 and the diameter of the first through hole of the plate-shaped float member 342 each is made slightly larger than the diameter of the first pin 144. Thus, after engaging the other end of the arm 350 into the one end of the plate-shaped float member 342, the first pin 144 is inserted into the through hole 352 of the arm 350 and the first through hole of the plate-shaped float member 342, and thereby, the float unit 340 can be connected to the arm 350, swingable relative to the arm 350 as indicated by arrow 10 in FIG. 15. Note that both ends of the first pin 144 are swaged so as to prevent the same from falling off.

The float unit 340 further includes the second pin 244 which serves as a second shaft part provided at the other end of the plate-shaped float member 342 in parallel to the first pin 144. The other end of the plate-shaped float member 342 is provided with a second through hole penetrating the plate-shaped float member 342 in the width direction thereof. The diameter of the second through hole is slightly larger than the diameter of the second pin 244.

Furthermore, the float unit 340 includes a plurality of third pins 344, each of which serves as a third shaft and are provided in parallel to the first pin 144 between the first pin 144 and the second pin 244 with a distance separating each other. A plurality of third through holes are provided between the first through hole and the second through hole in the plate-shaped float member 342. The plurality of third through holes are disposed to penetrate the plate-shaped float member 342 in the thickness direction thereof and spaced by a distance from one another. The diameter of each third through hole is slightly larger than the diameter of each third pin 344.

In the present embodiment, the float unit 340 further includes the first roller-shaped float member 141 rotatably inserted around the first pin 144. Specifically, there are two of the first roller-shaped float members 141 which are inserted through by the first pin 144. The diameter R of each first roller-shaped float member 141 is greater than the thickness T of the plate-shaped float member 342. The number of the first roller-shaped float members 141 is not limited to two, it may be one or more.

Two of the first roller-shaped float members 141 are arranged in such a manner that one is inserted around the first pin 144 from one end thereof and the other is inserted around the first pin 144 from the other end thereof so as to sandwich therebetween the plate-shaped float member 342.

In the present embodiment, the float unit 340 further includes the second roller-shaped float member 241 rotatably inserted around the second pin 244. Specifically, there are two of the second roller-shaped float members 241 which are inserted through by the second pin 244. The diameter R of each second roller-shaped float member 241 is greater than the thickness T of the plate-shaped float member 342. Two of the second roller-shaped float members 241 are arranged in such a manner that one is inserted around the second pin 244 from one end thereof and the other is inserted around the second pin 244 from the other end thereof so as to sandwich therebetween the plate-shaped float member 342. The second pin 244 is inserted into the second through hole, and both ends of the second pin 244 are swaged so as to prevent the same from falling off. The number of the second roller-shaped float members 241 is not limited to two, it may be one or more.

In the present embodiment, the float unit 340 further includes a plurality of third roller-shaped float members 341 rotatably inserted around each third pin 344. Specifically, there are two of third roller-shaped float members 341 which are inserted through by each third pin 344. The diameter R of each third roller-shaped float member 341 is greater than the thickness of the plate-shaped float member 342.

Two third roller-shaped float members 341 are arranged in such a manner that one is inserted around each third pin 344 from one end thereof and the other is inserted around the same third pin 344 from the other end thereof so as to sandwich therebetween the plate-shaped float member 342. In the side view, the plurality of third roller-shaped float members 341 are line up in the extending direction of the float unit 340. Each third pin 344 is inserted into each third through hole, and both ends of each third pin 344 are swaged so as to prevent the same from falling off. The number of third roller-shaped float members 241 inserted around each third pin 344 is not limited to two, it may be one or more.

A length L₃ between a tangent line to the outer edge of the first roller-shaped float member 141 disposed outer to third roller-shaped float member 341 and a tangent line to the outer edge of the second roller-shaped float member 341 disposed outer to third roller-shaped float member 341 is defined as the extending length of the float unit 340.

As described above, the extending length of the float unit 340 is greater than the maximum thickness of the float unit 340. In other words, the extending length L₃ of the float unit 340 is greater than the diameter R of each of the first roller-shaped float members 141, the second roller-shaped float members 241 and the third roller-shaped float members 341.

In the present embodiment, although the diameter of the first roller-shaped float member 141 is configured to be the same as the diameter of the second roller-shaped float member 241 and the diameter of third roller-shaped float member 341 but not limited thereto, the diameter of the first roller-shaped float member 141, the diameter of the second roller-shaped float member 241 and the diameter of third roller-shaped float member 341 may be different from each other as long as the diameter of each float member is smaller than the extending length L₃ of the float unit 340 and greater than the thickness of the plate-shaped float member 342.

Thus, by configuring the float unit 340 in such a manner, when the float unit 340 is sliding along the lower surface of the rubber bag 120, the first roller-shaped float members 141, the second roller-shaped float members 241 and the third roller-shaped float members 341 can contact the rubber bag 120 by rolling against the lower surface thereof.

As a result, it is possible to reduce the frictional resistance when the float unit 340 is sliding along the lower surface of the rubber bag 120. Thus, it is possible to prevent the rubber bag 120 from being worn out. In the present embodiment, since the entire float unit 240 is disposed with the roller-shaped float members, compared to the float unit 240 according to the second embodiment, the frictional resistance between the float unit 340 and the lower surface of the rubber bag 120 can be further reduced.

Further, by increasing the extending length of the float unit 340 while reducing the maximum thickness thereof, it is possible to ensure the float unit 340 a certain volume so as to obtain sufficient buoyancy in the insulation oil 130. As a result, it is possible to reduce the dead region of the oil level gauge. The reduction of the dead zone allows to make the housing 110 smaller, and thereby making the conservator compact. In addition, it is also possible to reduce the required amount of the insulation oil 130. Furthermore, the adoption of a dial typed oil level gauge allows to produce the conservator cheaper.

Hereinafter, a conservator according to an example will be described with reference to the drawings. It should be noted that since the conservator according to the present embodiment is different from the conservator according to the first embodiment only in the configuration of the float unit, the descriptions about the other components will not be repeated.

### Example

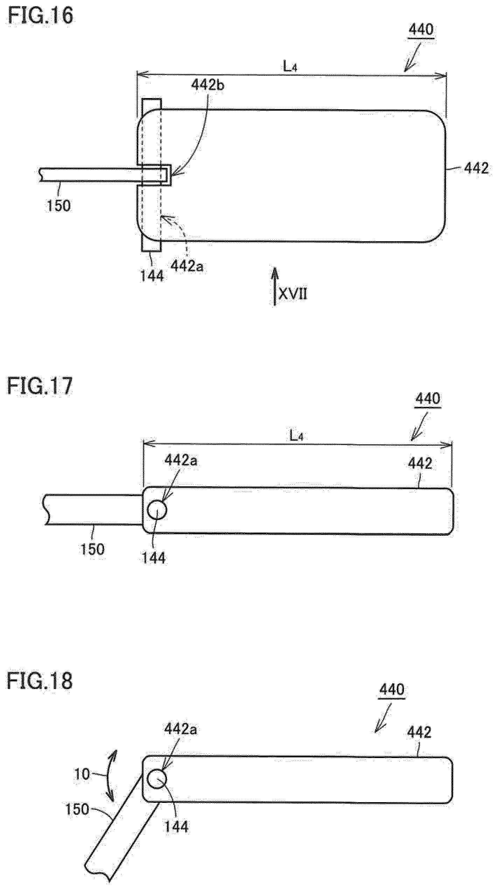

FIG. 16 is a planar view illustrating the configuration of a float unit of an oil level gauge in a conservator according to the example. FIG. 17 is a view illustrating the float unit viewed from the direction of an arrow XVII in FIG. 16. FIG. 18 is a view illustrating a state in which an arm is swung relative to the float unit according to the example. FIG. 18 is viewed from the same direction as FIG. 17.

As illustrated in FIGS. 16 and 17, a float unit 440 includes a plate-shaped float member 442, and the first pin 144 of a cylindrical shape which serves as a first shaft member provided at one end of the plate-shaped float member 442 and configured to join the plate-shaped float member 442 and the arm 150 in such a manner that they are swingable to each other.

The other end of the arm 150 is provided with a through hole 152 penetrating the arm 150 in a direction perpendicular to the swinging direction of the arm 150. One end of the plate-shaped float member 442 is formed with a through hole 442a penetrating the plate-shaped float member 442 in the width direction thereof and a recess 442b for housing therein the other end of the arm 150.

The diameter of the through hole 152 of the arm 150 and the diameter of the through hole 442a of the plate-shaped float member 442 each is made slightly larger than the diameter of the first pin 144. Thus, after locating the other end of the arm 150 inside recess 442b, the first pin 144 is inserted into the through hole 152 of the arm 150 and the through hole 442a of the plate-shaped float member 442, the float unit 440 can be connected to the arm 150, swingable relative to the arm 150 as indicated by arrow 10 in FIG. 15. Note that both ends of the first pin 144 are swaged so as to prevent the same from falling off.

A length L₄ between one end of the plate-shaped float member 442 and the other end of the plate-shaped float member 442 is defined as the extending length of the float unit 440. As described above, the extending length of the float unit 440 is greater than the maximum thickness T of the float unit 440.

Thus, by increasing the extending length of the float unit 440 while reducing the maximum thickness thereof, it is possible to ensure the float unit 440 a certain volume so as to obtain sufficient buoyancy in the insulation oil 130. As a result, it is possible to reduce the dead region of the oil level gauge. The reduction of the dead zone allows to make the housing 110 smaller, and thereby making the conservator compact. In addition, it is also possible to reduce the required amount of the insulation oil 130. Furthermore, the adoption of a dial typed oil level gauge allows to produce the conservator cheaper.

It should be understood that the embodiments disclosed herein have been presented for the purpose of illustration and description but not limited in all aspects. It is intended that the scope of the present invention is not limited to the description above but defined by the scope of the claims.

### LIST OF REFERENCE SIGNS

- 1: insulation oil
- 100: conservator
- 110: housing
- 111: flange
- 112: open valve
- 113: opening
- 120: rubber bag
- 130: insulation oil
- 140: float unit
- 141: first roller-shaped float member
- 142: plate-shaped float member
- 142a: curved surface
- 143: joining member
- 144: first pin
- 150: arm
- 151: swinging fulcrum
- 152: through hole
- 160: dial display unit
- 161: character display face
- 162: pointer
- 240: float unit
- 241: second roller-shaped float member
- 242: plate-shaped float member
- 242a: curved surface
- 242b: curved surface
- 243: joining member
- 244: second pin
- 340: float unit
- 341: third roller-shaped float member
- 342: plate-shaped float member
- 343a: groove
- 344: third pin
- 350: arm
- 352: through hole
- 440: float unit
- 442: plate-shaped float member
- 442a: through hole
- 442b: recess

## Claims

1. A conservator comprising:
- a housing (110) housing an insulation oil (130);
- a rubber bag (120) inflating or deflating inside the housing (110) so as to contact an oil surface of the insulation oil (130); and
- an oil level gauge detecting an oil level of the insulation oil (130) housed in the housing (110),
the oil level gauge including a float unit (140, 240, 340, 440), an arm (150) connected to one end of the float unit (140, 240, 340, 440), and a dial display unit (160) that is configured to display the oil level in response to an angle of the arm (150),
the length of the float unit (140, 240, 340, 440) in the extending direction thereof being larger than the maximum thickness of the float unit (140, 240, 340, 440), wherein the float unit (140, 240, 340, 440) includes a plate-shaped float member (142, 242, 342, 442), and a first shaft member (144) provided at one end of the plate-shaped float member (142, 242, 342, 442), wherein the first shaft member (144) joins the plate-shaped float member (142, 242, 342, 442) and the arm (150) in such a manner that the plate-shaped float member (142, 242, 342, 442) and the arm (150) are swingable to each other, **characterized in that** the float unit (140,240,340,440) being swingably connected to the arm (150) and extending away from the arm (150) along a lower surface of the rubber bag (120) which faces the bottom surface of the housing (110), wherein the arm (150) shapes in accordance with the shape of the rubber bag (120) as the float unit (140) is being sandwiched between the bottom surface of the housing (110) and the lower surface of the rubber bag (120), wherein the float unit (140, 240, 340) further includes a first roller-shaped float member (141) which rotates around the first shaft member (144) and which is inserted through by the first shaft member (144), wherein the first shaft member (144) being inserted into a through hole of the first roller-shaped float member (141) and a through hole of the arm (150), wherein the first roller-shaped float member (141) contacts the rubber bag (120) by rolling against the lower surface thereof.

2. The conservator according to claim 1,
wherein the float unit (240, 340) further includes a second shaft member (244) disposed at the other end of the plate-shaped float member (242, 342) and being in parallel to the first shaft member (144), and a second roller-shaped float member (241) rotatably inserted around the second shaft member (244), wherein the second roller-shaped float member (241) contacts the rubber bag (120) by rolling against the lower surface thereof.

3. The conservator according to claim 2,
wherein the float unit (340) further includes a plurality of third shaft members (344) disposed with a spacing from one another between the first shaft member (144) and the second shaft member (244) and wherein the third shaft members (344) are in parallel to the first shaft member (144), and a plurality of third roller-shaped float members (341) rotatably inserted around the third shaft members (344), respectively, wherein the plurality of the third roller-shaped float members (341) contact the rubber bag (120) by rolling against the lower surface thereof along the extending direction of the float unit (340).

## Patentansprüche

1. Konservator, der Folgendes aufweist:
- ein Gehäuse (110), das ein Isolieröl (130) aufnimmt;
- einen Gummisack (120), der sich innerhalb des Gehäuses (110) aufbläst oder entleert, sodass er mit einer Öloberfläche des Isolieröls (130) in Kontakt kommt; und
- eine Ölstandanzeige, die den Ölstand des im Gehäuse (110) aufgenommenen Isolieröls (130) detektiert, wobei die Ölstandanzeige eine Schwimmeinheit (140, 240, 340, 440), einen Arm (150), der mit dem einen Ende der Schwimmeinheit (140, 240, 340, 440) verbunden ist, und eine Skala-Anzeigeeinheit (160) aufweist, die dazu ausgebildet ist, den Ölstand als Reaktion auf einen Winkel des Arms (150) anzuzeigen,
wobei die Länge der Schwimmeinheit (140, 240, 340, 440) in ihrer Erstreckungsrichtung größer ist als die maximale Dicke der Schwimmeinheit (140, 240, 340, 440),
wobei die Schwimmeinheit (140, 240, 340, 440) ein plattenförmiges Schwimmelement (142, 242, 342, 442) und ein erstes Wellenelement (144) aufweist, das an dem einen Ende des plattenförmigen Schwimmelements (142, 242, 342, 442) angeordnet ist,
wobei das erste Wellenelement (144) das plattenförmige Schwimmelement (142, 242, 342, 442) und den Arm (150) derart verbindet, dass das plattenförmige Schwimmelement (142, 242, 342, 442) und der Arm (150) schwenkbar zueinander sind,
**dadurch gekennzeichnet, dass**
die Schwimmeinheit (140, 240, 340, 440) schwenkbar mit dem Arm (150) verbunden ist und sich von dem Arm (150) entlang einer Unterseite des Gummisacks (120) erstreckt, die der Unterseite des Gehäuses (110) zugewandt ist,
wobei der Arm (150) sich gemäß der Form des Gummisacks (120) formt, während die Schwimmeinheit (140) zwischen der Bodenfläche des Gehäuses (110) und der Unterseite des Gummisacks (120) sandwichartig angeordnet ist,
wobei die Schwimmeinheit (140, 240, 340) ferner ein erstes rollenförmiges Schwimmelement (141) aufweist, das sich um das erste Wellenelement (144) dreht und in das erste Wellenelement (144) eingeführt ist, wobei das erste Wellenelement (144) in ein Durchgangsloch des ersten rollenförmigen Schwimmelements (141) und ein Durchgangsloch des Arms (150) eingesetzt ist,
wobei das erste rollenförmige Schwimmelement (141) mit dem Gummisack (120) dadurch in Berührung kommt, dass es gegen dessen Unterseite rollt.

2. Konservator gemäß Anspruch 1,
wobei die Schwimmeinheit (240, 340) ferner ein zweites Wellenelement (244) aufweist, das an dem anderen Ende des plattenförmigen Schwimmelements (242, 342) angeordnet ist und parallel zu dem ersten Wellenelement (144) verläuft, und wobei die Schwimmeinheit (240, 240) ferner ein zweites rollenförmiges Schwimmelement (241) aufweist, das um das zweite Wellenelement (244) drehbar eingesetzt ist,
wobei das zweite rollenförmige Schwimmelement (241) dadurch mit dem Gummisack (120) in Berührung kommt, dass es gegen dessen Unterseite rollt.

3. Konservator gemäß Anspruch 2,
wobei die Schwimmeinheit (340) ferner eine Vielzahl von dritten Wellenelementen (344) aufweist, die mit einem Abstand voneinander zwischen dem ersten Wellenelement (144) und dem zweiten Wellenelement (244) angeordnet sind, und
wobei die dritten Wellenelemente (344) parallel zu dem ersten Wellenelement (144) verlaufen und eine Vielzahl von dritten rollenförmigen Schwimmelementen (341) jeweils drehbar um die dritten Wellenelemente (344) eingesetzt sind,
wobei die Vielzahl der dritten rollenförmigen Schwimmelemente (341) mit dem Gummisack (120) dadurch in Berührung kommen, dass sie gegen dessen Unterseite rollen, und zwar entlang der Längsrichtung der Schwimmeinheit (340).

## Revendications

1. Conservateur comprenant:
- un boîtier (110) contenant une huile isolante (130);
- un sac en caoutchouc (120) se gonflant ou se dégonflant à l'intérieur du boîtier (110) de manière à venir en contact avec une surface de l'huile isolante (130); et
- une jauge de niveau d'huile détectant un niveau d'huile de l'huile isolante (130) contenue dans le boîtier (110),
la jauge de niveau d'huile incluant une unité à flotteur (140, 240, 340, 440), un bras (150) connecté à une extrémité de l'unité à flotteur (140, 240, 340, 440), et une unité d'affichage à cadran (160) qui est configurée pour afficher le niveau d'huile en réponse à un angle du bras (150),
la longueur de l'unité à flotteur (140, 240, 340, 440) dans la direction d'extension de celle-ci étant supérieure à l'épaisseur maximum de l'unité à flotteur (140, 240, 340, 440),
dans lequel l'unité à flotteur (140, 240, 340, 440) inclut un élément flotteur en forme de plaque (142, 242, 342, 442), et un premier élément formant arbre (144) prévu à une extrémité de l'élément flotteur en forme de plaque (142, 242, 342, 442),
dans lequel le premier élément formant arbre (144) joint l'élément flotteur en forme de plaque (142, 242, 342, 442) et le bras (150) de telle manière que l'élément flotteur en forme de plaque (142, 242, 342, 442) et le bras (150) sont capables de pivoter l'un par rapport à l'autre,
**caractérisé en ce que** l'unité à flotteur (140, 240, 340, 440) est connectée de manière pivotante au bras (150) et s'étend en éloignement du bras (150) le long d'une surface inférieure du sac en caoutchouc (120) opposée à la surface de fond du boîtier (110), dans lequel
le bras (150) présente une forme en accord avec la forme du sac en caoutchouc (120) quand l'unité à flotteur (140) est prise en sandwich entre la surface de fond du boîtier (110) et la surface inférieure du sac en caoutchouc (120),
dans lequel l'unité à flotteur (140, 240, 340) inclut en outre un premier élément flotteur en forme de rouleau (141) qui tourne autour du premier élément formant arbre (144) et qui est inséré à travers au moyen du premier élément formant arbre (144),
dans lequel le premier élément formant arbre (144) est inséré dans un trou traversant du premier élément flotteur en forme de rouleau (141) et un trou traversant du bras (150),
dans lequel le premier élément flotteur en forme de rouleau (141) vient en contact avec le sac en caoutchouc (120) enroulant contre la surface inférieure de celui-ci.

2. Conservateur selon la revendication 1,
dans lequel l'unité à flotteur (240, 340) inclut en outre un deuxième élément formant arbre (244) agencé à l'autre extrémité de l'élément flotteur en forme de plaque (242, 342) et parallèle au premier élément formant arbre (144), et un deuxième élément flotteur en forme de rouleau (241) inséré en rotation autour du deuxième élément formant arbre (244),
dans lequel le deuxième élément flotteur en forme de rouleau (241) vient en contact avec le sac en caoutchouc (120) en roulant contre la surface inférieure de celui-ci.

3. Conservateur selon la revendication 2,
dans lequel l'unité à flotteur (340) inclut en outre une pluralité de troisièmes éléments formant arbre (344) disposés avec un écartement les uns des autres entre le premier élément formant arbre (144) et le deuxième élément formant arbre (244) et
dans lequel les troisièmes éléments formant arbre (344) sont parallèles au premier élément formant arbre (144), et une pluralité de troisièmes éléments flotteurs en forme de rouleau (341) sont insérés en rotation autour des troisièmes éléments formant arbre (344), respectivement,
dans lequel la pluralité de troisièmes éléments flotteurs en forme de rouleur (341) viennent en contact avec le sac en caoutchouc (120) en roulant contre la surface inférieure de celui-ci le long de la direction d'extension de l'unité à flotteur (340).
